# EUROPEAN PATENT APPLICATION

(11) **EP 3 573 000 A1**
(43) Date of publication of application: **27.11.2019**
(21) Application number: 18173651.3
(22) Date of filing: 22.05.2018
(51) Int. Cl.: G06Q 20/32, G06Q 20/08, G06Q 20/12, G06Q 20/18, G06Q 20/28, G07F 17/00

(54) **METHOD AND SYSTEM FOR PROVIDING A SERVICE**

(71) Applicant: Mastercard Asia/Pacific Pte. Ltd., Singapore 189352 (SG)
(72) Inventor: WANG, Xijing, 398371 Geylang 06-22 (SG); AZEEM, Muhammad, 207226 Singapore (SG); FANG, Hui, 752507 Sembawang (SG); LI, Jiaming, 640533 Singapore (SG); HUANG, Donghao, 823267 Singapore (SG); GARRETT, Duncan, London, N1 2EJ (GB); BERIC, John, London, NW11 8NH (GB)
(74) Representative: Lawrence, Richard Anthony

(57) **Abstract**

The present disclosure relates to a computer-implemented method performed at a computing device for obtaining a service from a first device. The method comprises, at the computing device, establishing user credentials at a computing device and establishing a local communication with the first device and establishing with the first device a service identification for a service to be performed by the first device. The method further comprises sending request a message to a service platform to obtain approval of performance of the service. This message comprises the user credentials, a request for the service, and the service identification. The method further comprises receiving an approval message from the service platform comprising at least the service identification and signed on behalf of a service provider, and sending the signed approval message to the first device for validation in order to obtain a service. The present disclosure also relates to a computer-implemented method performed at a first device for providing a service to a computing device, and a computer-implemented method performed at a service platform for authorising performance of a service by a first device. The present disclosure further relates to a computing device, a first device and a service platform.

## Description

### TECHNICAL FIELD

The present disclosure relates to a method of providing a service and particularly, but not exclusively, using a computing device. Aspects of the disclosure relate to a first device, a service platform, a method performed at a computing device, a method performed at a first device, and a method performed at a service platform.

### BACKGROUND

The adoption of pay-per-use services is increasing rapidly through the use of computing devices with internet connectivity. The ability to provide services over a communication network is expanding greatly as increasing numbers of physical devices are provided with an embedded computing capability and network connectivity, enabling them to perform specific functions in connection with a network interaction (known as the Internet of Things, internet-of-things or loT).

Payment transactions are often made electronically on conventional computing devices and they typically use Europay, MasterCard and Visa (EMV) standardised technology. For low value transactions, contactless transactions are increasingly preferred. Contactless transactions rely on near field communication (NFC) technology and may be performed using a payment card or an electronic wallet application. In order to perform a contactless EMV transaction, the payment card or the mobile device is normally tapped against a terminal by the cardholder when prompted to do so. Payment credentials are provided from an electronic device to a merchant device. Typically, the merchant device is connected to the acquirer network and when the payment card is tapped against the merchant device, the transaction details are sent for approval to the acquirer network. Once the transaction is approved, the goods or services are released.

In some devices it will be appropriate to provide the kind of computing capability used by a merchant device - in such cases, it is straightforward to adapt the model used in a conventional merchant transaction to a "merchant" computing device, such as say a vending machine. For other devices, such as say an air dispenser or a fan, it may not be appropriate to provide that level of computing capability in or immediately associated with the device for economic or technical reasons or both. It would be desirable for payment to be made for services provided by such devices without requiring them to have the computing capability of a conventional merchant device.

The present disclosure has been devised to mitigate or overcome at least some of the above-mentioned problems.

### SUMMARY OF THE DISCLOSURE

According to a first aspect of the present disclosure there is provided a computer-implemented method performed at a computing device for obtaining a service from a first device. The method comprises, at the computing device, establishing user credentials at a computing device and establishing a local communication with the first device and establishing with the first device a service identification for a service to be performed by the first device. The method further comprises sending a request message to a service platform to obtain approval of performance of the service. This message comprises the user credentials, a request for the service, and the service identification. The method further comprises receiving an approval message from the service platform comprising at least the service identification and signed on behalf of a service provider, and sending the signed approval message to the first device for validation in order to obtain a service.

The method performed at a computing device may further comprise negotiating a service request with the first device after establishing a local communication between a first device and the computing device.

The computing device may receive the service identification from the first device after negotiating the service request.

The method performed at a computing device may further comprise establishing user credentials at the computing device comprises generating a payment cryptogram comprised within the user credentials.

The method performed at a computing device may further comprise establishing a local communication between the first device and the computing device comprises establishing a Wi-Fi connection, a Bluetooth connection or an NFC connection.

The request message may further comprise one or more of a terminal ID and amount of transaction.

The request message may contain an application cryptogram, and the method may further comprise sending the application cryptogram via the service platform to a merchant acquirer for transaction processing.

The signed approval message may comprise an elliptic curve digital signature or an RSA signature.

The computing device may be a mobile computing device.

One or more method steps performed at a computing device may be performed by a mobile payment application stored in a memory of the mobile device performed by a processor of the mobile computing device.

According to a second aspect of the present disclosure there is provided a computer-implemented method performed at a first device for providing a service to a computing device. The method comprises establishing local communication with the computing device and establishing with the computing device a service identification for a service to be performed by the first device. The method further comprises receiving an approval message from the computing device, wherein the approval message is signed on behalf of a service provider to confirm that the first device is to perform the service. The method further comprises determining that the approval message has a valid signature on behalf of the service provider, and providing the service in the event that the signature of the approval message is valid.

The method performed at a first device may further comprise negotiating a service request with the computing device after establishing a local communication between the first device and the computing device.

The first device may provide the service identification to the computing device after negotiating the service request.

The method performed at a first device, wherein establishing a local communication between the first device and the computing device may comprise establishing a Wi-Fi connection, a Bluetooth connection or an NFC connection.

The signed approval message from the computing device may indicate that there has been a successful payment transaction.

The signed approval message may comprise an elliptic curve digital signature or an RSA signature.

According to a third aspect of the present disclosure there is provided a computer-implemented method performed at a service platform for authorising performance of a service by a first device. The method comprises receiving a message from a computing device, wherein the message comprises: user credentials; a request for the service; and a service identification. The method further comprises obtaining approval for performance of the service, obtaining an approval message signed on behalf of the service provider, wherein the signed approval message comprises the service identification, and sending the signed approval message to the computing device to enable the computing device to obtain performance of the service by the first device.

The received message may comprise an application cryptogram and the method performed at a service platform may further comprise routing the application cryptogram to an acquirer for processing of a payment transaction.

The request message may further comprise one or more of a terminal ID and amount of the transaction.

Routing the application cryptogram to the merchant acquirer may further comprise providing additional merchant information for processing of the transaction.

The method performed at a service platform may further comprise receiving a signed approval message from the merchant acquirer to indicate that the transaction has been made successfully.

The transaction may be an EMV transaction.

The signed approval message may comprise an elliptic curve digital signature or an RSA signature.

According to a fourth aspect of the present disclosure there is provided a computing device adapted for obtaining a service from a first device, comprising at least one processor, at least one memory, and communication means for local communication with the first device and communication with a service platform, wherein the computing device is adapted to perform the method of the first aspect of the disclosure.

The computing device may be a mobile computing device.

The mobile computing device may be a mobile telephone.

The mobile computing device may have a mobile payment application installed thereon, and the mobile payment application may carry out one or more steps of the method.

According to a fifth aspect of the present disclosure there is provided a first device adapted for providing a service to a computing device, wherein the first device comprises a processing capability and communication means for local communication with the computing device, wherein the first device is adapted to perform the method of the second aspect of the disclosure.

The first device may comprise an embedded processor and a local wireless communication means.

According to a sixth aspect of the present disclosure there is provided a service platform adapted for authorising provision of a service by a first device, wherein the service platform comprises at least one processor, at least one memory, and communication means for communication with the computing device, wherein the service platform is adapted to perform the method of the third aspect of the disclosure.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the disclosure will now be described, by way of example only, with reference to the accompanying drawings, in which:
Figure 1 is a schematic diagram illustrating a typical four-party model used in payment interactions between entities operating in a card scheme;
Figure 2 is a schematic diagram illustrating the relevant components for the method for providing a service at an internet-of-things device in accordance with an embodiment of the disclosure;
Figure 3 is a sequence diagram for providing a service at an internet-of-things acceptance point by performing an EMV transaction in accordance with another embodiment of the disclosure;
Figure 4 is a schematic diagram for controlling an electronic lock at an unmanned vehicle by performing an EMV transaction in accordance with another embodiment of the disclosure;
Figure 5 is a schematic diagram for controlling an electronic lock at a smart locker by performing an EMV transaction in accordance with another embodiment of the disclosure; and
Figure 6 is a schematic diagram for engaging a car sharing service requested at a car sharing application by performing an EMV transaction in accordance with another embodiment of the disclosure.

### DETAILED DESCRIPTION

The claimed method provides a payment solution and method of providing a service at a device such as an internet-of-things (loT) device. As described previously, this will typically be a device with some computing capability - typically a limited embedded computing capability - and the capacity to communicate over at least a communication path, typically local wireless networking.

The approach taken to provide a service involves improving integration between a computing device in connection with an loT device, a service platform and a service provider in order to improve security and convenience to the user.

The first device used in the present disclosure may be any form of electronic device with internet connectivity or used to initiate the exchange and collection of data and information. The computing device used in the present disclosure may be any form of electronic device, but the claimed disclosure has particular utility for mobile computing devices such as smart phones. The service platform used in the present disclosure may be any form of service platform, but the claimed disclosure has particular utility for payment transactions to a merchant. The service provider used in the present disclosure may be any form of service provider, but the claimed disclosure has particular utility for payment transactions made through a merchant acquirer network.

It is to be understood that in the present disclosure the loT device may be referred to as the loT acceptance point and vice versa. The loT device may provide functionality whereas the loT acceptance point may be involved in the decision as to whether or not the service that is requested can be provided.

In certain embodiments, an apparatus known as a Mini EMV Kernel (MEK) is placed into an loT device to enable the loT device to act as a payment acceptance device without the loT device being connected directly to the payment network. Using the MEK, the loT device may be controlled by performing an EMV transaction, and the MEK validates a transaction approval notification at the loT device.

A generic example of using an MEK is as follows. A local communication may be established between a mobile device and the loT device and payment card details may be added through an application installed on the mobile device. Next, a single use key (SUK) would be downloaded and the card would be tokenized.. Once an EMV transaction is processed and, if the transaction is performed successfully, a transaction approval notification may be sent from the payment network to the MEK in the loT device, via the mobile device, for validation. The approval notification may then be validated at the MEK in the loT device. The MEK may then interact with hardware installed on the loT device to provide a requested service.

The present disclosure also provides a payment solution and method of providing a service at a device such as an loT device, where the service is a sale of product. For example, a user may interact with the loT device of the present disclosure to process a transaction. Once the transaction has been completed successfully, the product is released to the user.

General and specific embodiments of the disclosure will be described below with reference to the Figures.

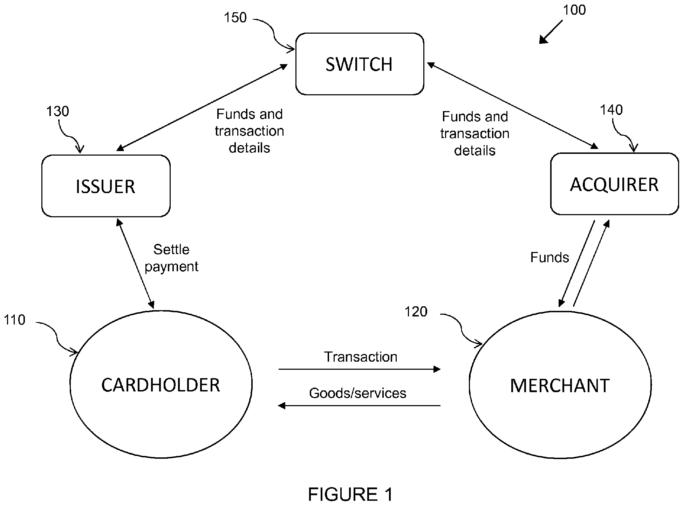

Figure 1 is a schematic diagram of a typical four-party model or four-party payment transaction scheme. The diagram illustrates the entities present in the model and the interactions occurring between entities.

Normally, card schemes - payment networks linked to payment cards - are based on one of two models: a three-party model (adopted by American Express) or a four-party model (adopted by Visa and Mastercard). For the purposes of this document, the four-party model 100 is described in further detail below.

The four-party model may be used as a basis for the transaction network. For each transaction, the model comprises four entity types: cardholder 110, merchant 120, issuer 130 and acquirer 140. In this model, the cardholder 110 purchases goods or services from the merchant 120. The issuer 130 is the bank or any other financial institution that issued the card to the cardholder 110. The acquirer 140 provides services for card processing to the merchant 120.

The model also comprises a central switch 150 - interactions between the issuer 130 and the acquirer 140 are routed via the switch 150. The switch 150 enables a merchant 120 associated with one particular bank (acquirer 140) to accept payment transactions from a cardholder 110 associated with a different bank (issuer 130).

A typical transaction between the entities in the four-party model can be divided into two main stages: authorisation and settlement. The cardholder 110 initiates a purchase of a good or service from the merchant 120 using their card. Details of the card and the transaction are sent to the issuer 130 via the acquirer 140 and the switch 150 to authorise the transaction. Should the transaction be considered abnormal by the issuer 130, the cardholder 110 may be required to undergo a verification process to verify their identity and the details of the transaction. Once the verification process is complete the transaction is authorised.

On completion of the transaction between the cardholder 110 and the merchant 120, the transaction details are submitted by the merchant 120 to the acquirer 140 for settlement.

The transaction details are then routed to the relevant issuer 130 by the acquirer 140 via the switch 150. Upon receipt of these transaction details, the issuer 130 provides the settlement funds to the switch 150, which in turn forwards these funds to the merchant 120 via the acquirer 140.

Separately, the issuer 130 and the cardholder 110 settle the payment amount between them. In return, a service fee is paid to the acquirer 140 by the merchant 120 for each transaction, and an interchange fee is paid to the issuer 130 by the acquirer 140 in return for the settlement of funds.

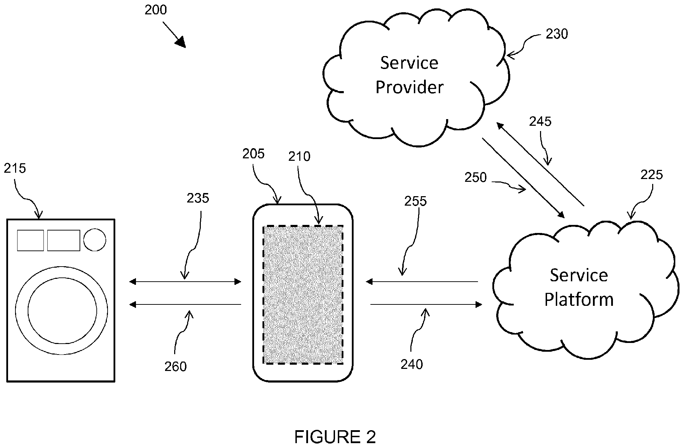

Figure 2 illustrates schematically the relevant components 200 for providing a service at an loT device in accordance with an embodiment of the disclosure. The relevant components include a computing device 205 and a first device 215 suitable for implementing part of the claimed method, a service platform 225 and a service provider 230. In the example shown, the computing device is a mobile phone 205 - in other embodiments, the computing device may be another type of computing device such as a computer or a tablet. The mobile phone 205 has a display 210 providing, in this example, a touchscreen user interface. User credentials are established at the mobile phone 205, and a local communication 235 is established between the mobile phone 205 and a first device 215. The local communication 235 may be established via, for example, Bluetooth or Wi-Fi. The first device 215 could be one of a wide variety of devices with embedded computing capability, appropriate functionality (typically a limited and local functionality) and at least local communication capability. For example, the first device 215 could be a Bluetooth or Wi-Fi-enabled air conditioning unit, washing machine or electronic lock. The first device 215 may be any device used to initiate the exchange and collection of data and information appropriate for use in this operational approach.

Once a local communication 235 is established between the mobile phone 205 and the first device 215, a service request is sent from the mobile phone 205 to the first device 215, where the service request is stored locally. Credentials of the service, for identifying the service request, are then generated at the first device 215. Next, a request message comprising the user credentials, the service request and the service credentials is generated at the first device 215. The request message is then sent 235, 240 to the service platform 225 via the mobile phone 205 and routed 245 to the service provider 230 for approval, in embodiments embedded in a message that also initiates payment. A signed approval message comprising a signature is sent 250 from the service provider 230 to the service platform 225 and onto the mobile phone 205.

Once the signed approval message is received 255 by the mobile phone 205 from the service platform 225, the signed approval message is sent 260 to the first device 215 for verification. The signed approval message is then validated at the first device 215, and the service is initiated and provided.

The present disclosure enables a service to be provided to the first device 215 using connectivity, such as Bluetooth or Wi-Fi, available on a typical mobile phone 205. Advantageously, existing devices can be transformed easily and efficiently in order to provide them with the ability to provide a wide variety of services without being connected directly to the service provider 230. It is to be understood that the service provided to the first device as described in Figure 2 is without limitation. One example is providing control of the washing machine if the first device were a Bluetooth-enabled washing machine. Another example is providing control of an air conditioning unit that is connectable by Wi-Fi. In certain embodiments, the service provider 230 may be a payment network, and the service request message may be approved and a service approval message signed only if a payment transaction such as, for example, an EMV transaction, has been completed successfully.

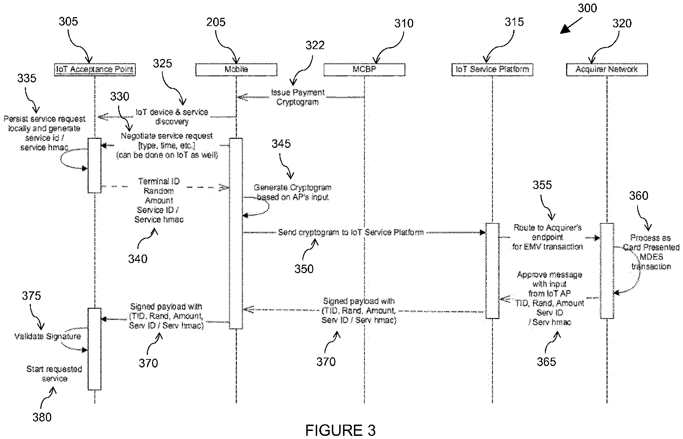

Figure 3 is a sequence diagram 300 for providing a service at an loT acceptance point by performing an EMV transaction in accordance with another embodiment of the disclosure.

The relevant components of the sequence diagram include a mobile phone 205 enabled to support a mobile payment application, in this example a Mastercard cloud-based payments (MCBP) application 310, an loT acceptance point 305, which is an example of a first device 215 suitable for implementing part of the claimed method, an loT service platform 315, which is an example of a service platform 225 and an acquirer network 320, which is an example of a service provider 230. MCBP is a secure and scalable software-based solution developed by Mastercard to digitise card credentials and enable both contactless and remote payment transactions. Other embodiments of the disclosure may employ other digitised card solutions, or other mobile payment application types. MCBP uses a tokenization technique and dynamic security information such as a payment cryptogram to initiate a payment transaction instead of PAN (Personal Account Number). Tokens are used by mobile devices instead of card numbers provided on physical payment cards. Using tokens provides an extra layer of security as the token can be locked to a specific device or channel. The credentials of the user are also established at the mobile phone 205.

The mobile phone 205, upon activation of a locating signal such as Bluetooth, may discover 325 an loT device and services. It is to be understood that the local communication between the mobile phone 205 and the loT acceptance point 305 may be established by any other communication means such as, for example, Wi-Fi or NFC. The loT device 305 could be one of a wide variety of devices. For example, the loT device 305 could be a Bluetooth or Wi-Fi-enabled air conditioning unit, washing machine or electronic lock.

Once the loT device and service have been discovered 325 and a local communication 235 is established between the mobile phone 205 and the loT acceptance point 305, a service request is negotiated by the user of the mobile phone and sent 330 from the mobile phone 205 to the loT acceptance point 305. Prior to this point, the mobile phone 205 will have been provisioned 322 suitably (for example, by provision of a payment token and/or a single use key) to allow it to issue a payment cryptogram from an MCBP server 310. The service request may include, for example, the type of service required, a time stamp, user credentials, and/or other options related to the requested service. In certain embodiments, the negotiation of the service request can be carried out at the loT device. The service request is stored 335 locally at the loT acceptance point. Credentials of the service, such as a service ID for identifying the service request, are then generated at the loT acceptance point 305. Next, a service request message comprising a terminal ID, a random number, service request ID and amount is generated at the loT acceptance point 305. The service request message is then sent 340 from the loT acceptance point 305 to the mobile phone 205. A payment cryptogram is generated 345 by MCBP using information about the transaction such as, for example, the transaction amount, the currency and/or the country in which the transaction is performed. The payment cryptogram includes the service request message- the service request message is thus embedded in payment messaging. The cryptogram is sent 350 to the loT service platform 315 and the EMV related cryptogram is further routed 355 to the merchant acquirer network 320 of the loT acceptance point for Mastercard Digital Enablement Service (MDES) EMV transaction processing. In certain embodiments, the cryptogram is enriched at the loT service platform by augmenting the cryptogram with further merchant information.

Once the cryptogram is received by the merchant acquirer network 320, a payment transaction is processed 360. If the transaction is performed successfully, a transaction approval notification is sent 365 from the MDES, which corresponds to the Mastercard digitisation and tokenisation platform, to the loT service platform 315. A signature is applied to the approval notification at the loT service platform 315, and consequently the signed approval notification is relayed 370 to the loT acceptance point 305, via the mobile phone 205, for validation. The signature could be, for example, an elliptic curve signature or an RSA signature. In certain embodiments, the signature may be checked by an application on the mobile phone 205, before relaying the signed approval notification to the loT acceptance point 305 for validation. Next, the signature in the signed approval notification is validated 375 at the loT acceptance point 305 by the MEK, and the requested service is started 380.

It is to be understood that the mobile payments application located on the mobile phone is not limited to MCBP. The mobile payments application may be any software-based solution to enable contactless and/or remote payment transactions. For example, the mobile payments application may carry out host card emulation (HCE) which describes on-device technology that permits a mobile phone to perform card emulation on an NFC-enabled device without relying on access to a secure element.

Advantageously, the present method enables the loT acceptance point to handle many different devices, and, since the acceptance point is not directly connected to the payment network, the method reduces the computational resources and processing power required at the point at which a service is required and is released. The loT acceptance point is required to only store a public key to validate the signature in the approval notification and thus, no secure element is required at the loT acceptance point.

It should be understood that a general traditional exemplary MCBP payment flow is as follows: firstly MCBP issues a payment token to the mobile phone. Then the mobile phone can use this payment token and a payment cryptogram to initiate a transaction to the merchant. The merchant forwards both the token and the payment cryptogram to its acquirer and the acquirer passes the token and the payment cryptogram to the payment network. After token validation, the payment network requests authorization from the issuer and the response is returned to the merchant. The present method provides significant advantages over the traditional MCBP payment flow in the present context.

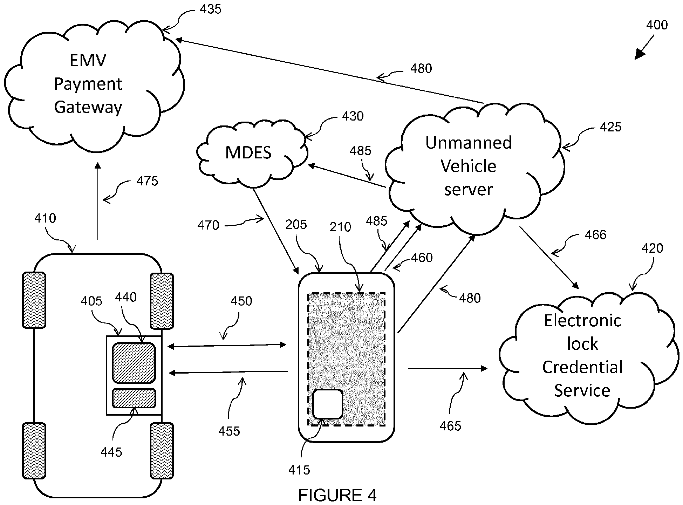

Figure 4 is a schematic diagram 400 for controlling a Bluetooth-enabled electronic lock 405, which is an example of an loT acceptance point 305, and an associated unmanned vehicle 410 by performing an EMV transaction in accordance with another embodiment of the disclosure.

The relevant components of the schematic diagram 400, aside from the Bluetooth-enabled electronic lock 405 and the unmanned vehicle 410, include: a mobile phone 205 comprising a touchscreen user interface 210 and an unmanned vehicle hailing application 415; a credential service 420 for the electronic lock 405; a server 425 for the unmanned vehicle 410; the MDES 430; and the EMV payment gateway 435. The mobile phone 205 may also comprise an MCBP application 310. An MEK 440 is placed into the Bluetooth-enabled electronic lock 405 to enable the Bluetooth-enabled electronic lock 405 to act as a payment acceptance device. The Bluetooth-enabled electronic lock 405 also comprises a DirectKey Module 445 for supporting the passing through of data.

First the user logs in 460 to the unmanned vehicle hailing application 415 and access to the application is granted 465 via an authentication code and the electronic lock credential service 420. Payment card details are added through the unmanned vehicle hailing application 415 which sends a request 485 to tokenize the card via the Unmanned Vehicle Server 425 to MDES 430. Next, the card is tokenized and the token formed from the tokenization of the card details is joined with a SUK to form a set of payment credentials. The payment credentials are then downloaded 470 to the mobile phone 205. Once these steps have been completed, the user account is set up and available for booking, unlocking and paying for the unmanned vehicle. The mobile phone 205, upon activation of a locating signal such as Bluetooth, discovers 450 the unmanned vehicle 410 and its Bluetooth-enabled electronic lock 405.

Once the Bluetooth-enabled electronic lock 405 has been discovered 450 and a local communication is established between the mobile phone 205 and the Bluetooth-enabled electronic lock 405, the next step is, thus, to book the unmanned vehicle 410 via the unmanned vehicle hailing application 415, which is an example of a service request 330 negotiated by the user of the mobile phone 205. The service request is sent 455 from the mobile phone 205 to the Bluetooth-enabled electronic lock 405. The MEK 440 receives an application cryptogram generated at the mobile phone 205 using the SUK and uses this to carry out a payment transaction 475 for the service through the EMV payment gateway 435. Steps 335 to 380 of Figure 3 can be applied to the present embodiment. The transaction could either be sent 475 from the unmanned vehicle 410 to the EMV Payment Gateway 435, or it could be sent 480 from the mobile phone 205 to the server 425 and onto the EMV payment gateway 435. Accordingly, if the transaction is performed successfully, the EMV transaction is captured 480 and a transaction approval notification is sent from the MDES to the unmanned vehicle server 425. A request 466 to grant access is made to the Electronic lock credential service 420. A signature is applied to the approval notification, and consequently the signed approval notification is relayed to the MEK 440 in the Bluetooth-enabled electronic lock 405, via the mobile phone 205, for validation. The signature in the signed approval notification is then validated at the MEK 440 in the Bluetooth-enabled electronic lock 405. The MEK 440 then interacts with hardware installed on the Bluetooth-enabled electronic lock 405 to unlock it and open the vehicle doors.

In certain embodiments, in the event that the unmanned vehicle 410 is not connected to the EMV payment gateway, an offline EMV authorisation is completed. The MEK uploads the authorisation result to the unmanned vehicle server before the EMV transaction is captured 480.

The user is required to be at the location of the Bluetooth-enabled electronic lock 405 through which payment is made, thus improving the security of the transaction. In addition, the present disclosure benefits from quick and easy hardware integration.

The MEK and the DirectKey Module may be integrated into many different loT devices, and does not require integration with back-end services.

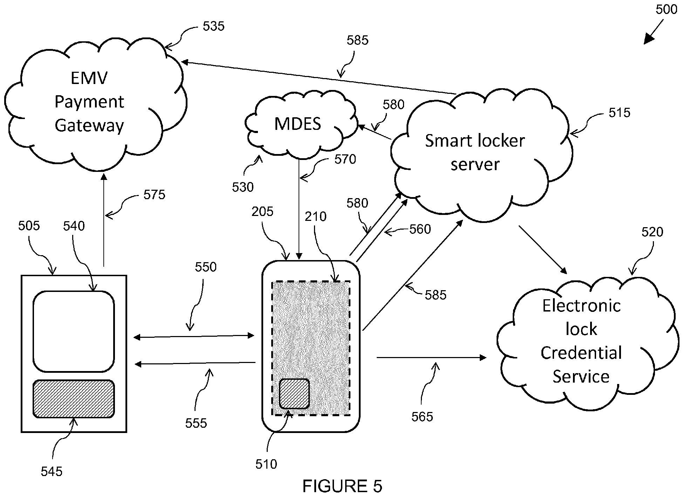

Figure 5 is a schematic diagram 500 for controlling an electronic lock 505, which is an example of an loT acceptance point 305, at a smart locker by performing an EMV transaction in accordance with another embodiment of the disclosure.

The relevant components of the schematic diagram 500, aside from the electronic lock 505, include: a mobile phone 205 comprising a touchscreen user interface 210 and a smart locker application 510; a credential service 520 for the electronic lock 505; a server 515 for the electronic lock 505; the MDES 530; and the EMV payment gateway 535. An MEK 540 is integrated into the electronic lock 505 to enable the electronic lock 505 to act as a payment acceptance device. The electronic lock 505 also comprises a DirectKey Module 545 for supporting the passing through of data.

The mobile phone 205, upon activation of a locating signal such as Wi-Fi, discovers 550 the electronic lock 505. Once the electronic lock 505 and has been discovered 550 and a local communication is established between the mobile phone 205 and the electronic lock 505, the user logs in 560 to the smart locker application 510 using an authentication code and access to the application is granted 565. Payment card details are added through the smart locker application 510 which sends a request 580 to tokenize the card via the Smart Locker Server 515 to MDES 530. Next, the card is tokenized and the token formed from the tokenization of the card details is joined with a SUK to form a set of payment credentials. The payment credentials are then downloaded 570 to the mobile phone 205. Once these steps have been completed, the user account is set up and available for paying and unlocking the electronic lock 505.

A service request is sent 555 from the mobile phone 205 to the electronic lock 505. Next, an EMV transaction is initiated and processed. The transaction could either be sent 575 from the electronic lock 505 to the EMV payment gateway 535, or it could be sent 585 from the mobile phone 205 to the server 515 and onto the EMV Payment Gateway 535. The user credentials are then uploaded 565 to the electronic lock credential service 520. Steps 335 to 380 of Figure 3 can be applied to the present embodiment. Accordingly, if the transaction is performed successfully, a transaction approval notification is sent from the MDES to the smart locker server 515. A signature is applied to the approval notification, and consequently the signed approval notification is relayed to the MEK 540 in the electronic lock 505, via the mobile phone 205, for validation. The signature in the signed approval notification is then validated at the MEK 540 in the electronic lock 505. The MEK 540 then interacts with hardware installed on the electronic lock 505 to unlock it and open the smart locker.

In certain embodiments, in the event that there is no connection available to the EMV payment gateway, an offline EMV authorisation is completed. The MEK 540 sends the unlock command to the DirectKey module 545, and the MEK 540 uploads the authorisation result to the smart locker server 515 by, for example, using an administrative function.

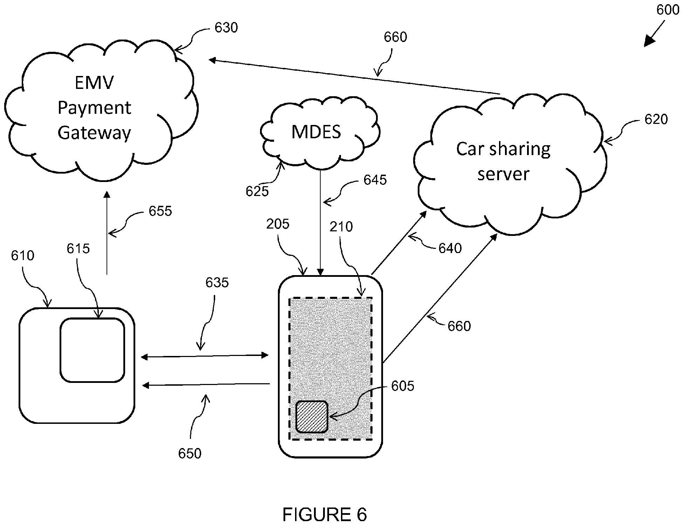

Figure 6 is a schematic diagram 600 for engaging a car sharing service requested at a car sharing application 605 by performing an EMV transaction in accordance with another embodiment of the disclosure.

The relevant components of the schematic diagram 600 include: a mobile phone 205 comprising a touchscreen user interface 210 and the car sharing application 605; a driver application 610 comprising an MEK 615 (hosted on a suitable computing device); a server 620 for the car sharing application; the MDES 625; and the EMV payment gateway 630. The MEK 615 is integrated with the driver application 610 to enable the device hosting the driver application 610 to act as a payment acceptance device.

The mobile phone 205, upon activation of a locating signal such as Wi-Fi, discovers 635 the driver application 610. Once the driver application 610 has been discovered 635 and a local communication is established between the mobile phone 205 and the driver application 610, the user logs in 640 to the car sharing application 605 on the mobile phone 205. Payment card details are added through the car sharing application 605 which sends a request to tokenize the relevant payment card via the Car Sharing Server 620 to MDES 625. Next, the card is tokenized and the token formed from the tokenization of the card details is joined with a SUK to form a set of payment credentials. The payment credentials are then downloaded 645 to the mobile phone 205. Once these steps have been completed, the user account is set up and available for booking and paying for a car sharing service.

The next step is, thus, to book the car sharing service via the car sharing application 605, which is an example of a service request 330 negotiated by the user of the mobile phone 205. The service request is sent 650 from the mobile phone 205 to the driver application 610. After the trip has ended, a notification is sent to the mobile phone 205 of the user via Wi-Fi or Bluetooth. The user then makes a payment for the car sharing service via the driver application 610. The SUK is used to generate an application cryptogram at the mobile phone 205; which is sent to the MEK 615. A payment transaction 655 is carried out for the car sharing service through the EMV payment gateway 630. An EMV transaction is thus initiated and processed. The transaction could either be sent 655 from the car to the EMV Payment Gateway 630, or it could be sent 660 from the mobile phone 205 to the server 620 and onto the EMV payment gateway 630. Steps 335 to 380 of Figure 3 can be applied to the present embodiment.

In certain embodiments, in the event that the driver application 610 is not connected to the EMV payment gateway 630, an offline EMV authorisation is completed. The MEK uploads the authorisation result to the car sharing server 620 when the connectivity is resumed. Advantageously, this enables the service to be used offline or when temporarily offline as it enables offline transaction processing.

It is to be understood that the MEK can be integrated easily into many different devices. The MEK is placed into, for example, an loT device to enable the loT device to act as a payment acceptance device. The MEK may then receive an application cryptogram generated using a single use key for payment for a service from the user and so carry out a payment transaction for the service through a EMV payment gateway. Accordingly, the MEK may then interact with hardware installed on the connectable device to enable the service. While embodiments are described in operation with MDES, it will be understood that MDES is only an example of one system that is suitable for implementing the described embodiments. Other digitisation and tokenisation platforms, or a combination of multiple platforms, may be used to perform tokenisation services and process transactions.

Furthermore, while embodiments are described in operation with MCBP, it is to be understood that MCBP is only an example of one application that is suitable for implementing the described embodiments. Other mobile payment applications types or software-based digitised card solutions may be used and supported by the mobile device to enable digitisation of card credentials and to enable both contactless and remote payment transactions.

The present disclosure, therefore, enables a novel and advantageous way of conducting an EMV transaction at connectable devices using connectivity, such as Bluetooth, NFC or Wi-Fi, available on a typical computing device such as a mobile phone. Advantageously, the present disclosure may be integrated easily and efficiently with existing connectable devices. This transforms existing connectable devices and provides them with the ability to provide consistent and universal payment capability which supports many different merchants.

Many modifications may be made to the above examples without departing from the scope of the present disclosure as defined in the accompanying claims.

## Claims

1. A computer-implemented method performed at a computing device for obtaining a service from a first device, wherein the method comprises at the computing device:
establishing user credentials at the computing device;
establishing local communication with the first device and establishing with the first device a service identification for a service to be performed by the first device;
sending a request message to a service platform to obtain approval of performance of the service, wherein the message comprises:
the user credentials;
a request for the service; and
the service identification;
receiving an approval message from the service platform comprising at least the service identification and signed on behalf of a service provider; and
sending the signed approval message to the first device for validation in order to obtain a service.

2. The method of Claim 1, further comprising negotiating a service request with the first device after establishing a local communication between a first device and the computing device.

3. The method of Claim 2, wherein the computing device receives the service identification from the first device after negotiating the service request.

4. The method of any preceding claim, wherein the request message contains an application cryptogram, and the method further comprises sending the application cryptogram via the service platform to a merchant acquirer for transaction processing.

5. The method of any preceding claim, wherein the computing device is a mobile computing device and one or more method steps are performed by a mobile payment application stored in a memory of the mobile device performed by a processor of the mobile computing device.

6. A computer-implemented method performed at a first device for providing a service to a computing device, wherein the method comprises:
establishing local communication with the computing device and establishing with the computing device a service identification for a service to be performed by the first device;
receiving an approval message from the computing device, wherein the approval message is signed on behalf of a service provider to confirm that the first device is to perform the service;
determining that the approval message has a valid signature on behalf of the service provider; and
providing the service in the event that the signature of the approval message is valid.

7. The method of Claim 6, further comprising negotiating a service request with the computing device after establishing a local communication between a first device and the computing device.

8. The method of Claim 7, wherein the first device provides the service identification to the computing device after negotiating the service request.

9. The method of any of Claims 6 to 8, wherein the signed approval message from the computing device indicates that there has been a successful payment transaction.

10. A computer-implemented method performed at a service platform for authorising performance of a service by a first device, wherein the method comprises:
receiving a message from a computing device, wherein the message comprises:
user credentials;
a request for the service; and
a service identification;
obtaining approval for performance of the service;
obtaining an approval message signed on behalf of the service provider, wherein the signed approval message comprises the service identification; and
sending the signed approval message to the computing device to enable the computing device to obtain performance of the service by the first device.

11. The method of Claim 10, wherein the received message comprises an application cryptogram and the method further comprises routing the application cryptogram to an acquirer for processing of a payment transaction.

12. A computing device adapted for obtaining a service from a first device, comprising at least one processor, at least one memory, and communication means for local communication with the first device and communication with a service platform, wherein the computing device is adapted to perform the method of any of Claims 1 to 5.

13. The computing device of Claim 12, wherein the mobile computing device has a mobile payment application installed thereon, and wherein the mobile payment application carries out one or more steps of the method.

14. A first device adapted for providing a service to a computing device, wherein the first device comprises a processing capability and communication means for local communication with the computing device, wherein the first device is adapted to perform the method of any of Claims 6 to 9.

15. A service platform adapted for authorising provision of a service by a first device, wherein the service platform comprises at least one processor, at least one memory, and communication means for communication with the computing device, wherein the service platform is adapted to perform the method of Claim 10 or Claim 11.
